# EUROPÄISCHE PATENTANMELDUNG

(11) **EP 2 014 723 A1**
(43) Veröffentlichungstag der Anmeldung: **14.01.2009**
(21) Anmeldenummer: 08159785.8
(22) Anmeldetag: 07.07.2008
(51) Int. Cl.: C08L 97/00

(54) **Verfahren zur Herstellung von Korkformkörpern**

(30) Priorität: 11.07.2007 EP 07112259
(71) Anmelder: BASF SE, 67056 Ludwigshafen (DE)
(72) Erfinder: Michl, Kathrin, 67063, Ludwigshafen (DE); Börzel, Heidi, 67061, Ludwigshafen (DE); Jennewein, Hans-Albert, 67598, Gundersheim (DE)

(57) **Zusammenfassung**

Verfahren zur Herstellung von Korkformköpern unter Verwendung von Polyethyleniminen, Polyamidoaminen und Derivaten von Polyamidoaminen.

## Beschreibung

Gegenstand der vorliegenden Erfindung ist ein Verfahren zur Herstellung eines Formkörpers aus Korkpartikeln und einem Bindemittel, wobei die Korkpartikel mit dem Bindemittel beschichtet werden, daran anschließend die beschichteten Korkpartikel zu einem Formkörper geformt werden und daran anschließend der so erhaltene Formkörper einem thermischen Behandlungsschritt unterzogen wird, welches dadurch gekennzeichnet ist, dass als Bindemittel ein Polyethylenimin und/oder ein Kondensationsprodukt einer C4-C10-Dicarbonsäure und einem Polyalkylenpolyamin (Polyamidoamin) sowie dessen entsprechende Ethyleniminderivate eingesetzt werden und die Bindemittelmenge 0,1 bis 20 Gew.-%, bezogen auf die Gesamtmenge der Korkpartikel, beträgt.

Flaschenkork wird praktisch ausschließlich aus der Rinde der Korkeiche (Quercus suber) gewonnen, welche vom Stamm der Korkeiche abgeschält wird und aus der nach entsprechender Aufarbeitung die Flaschenkorken ausgestanzt werden. Zur optimalen Resourcenausnutzung werden die verbleibenden Rindenreste gemahlen und in Form von Korkmehl oder Korkschrot für Schüttungen, Wärmeisolierungen oder zusammen mit geeigneten Bindemitteln für Linoleum, Badefußmatten, Schuhsohlen etc. verwendet.

Da die Korkeiche nach dem Abschälen der Korkschicht zum Aufbau einer neuen, ausreichend dicken Korkschicht ca. 8 bis 10 Jahre benötigt, steht Kork nur in begrenztem Umfang zur Verfügung. Insbesondere zum Verschließen von Weinflaschen werden daher zunehmend Glas- und Kunststoffkorken bzw. Metallschraubverschlüsse verwendet, welche aber seitens der Verbraucher aufgrund der höheren Preise nicht immer in vollem Umfang Akzeptanz finden.

Um dem Verbraucher günstige, korkähnliche Formkörper, wie insbesondere Weinflaschenverschlüsse zur Verfügung zu stellen, wurde im Stand der Technik Korkmehl bzw. Korkschrot mit Bindemitteln, wie beispielsweise auf Polyurethanbasis (EP-A 496687, WO 97/30098, DE-A 2711958) oder Harnstoff/Formaldehyd-Harzbasis (EP-A 354526) gemischt und zu Flaschenkorken geformt.

Aufgabe der vorliegenden Erfindung war es daher, ein alternatives Bindemittel für Korkpartikel bereitzustellen.

Überraschender Weise wurde die Aufgabe durch das eingangs definierte Verfahren gelöst.

Unter Korkpartikel sollen im Rahmen dieser Schrift alle partikulären Korkteilchen, insbesondere Korkschrot oder Korkmehl verstanden werden, welche ein Sieb mit quadratischen Maschen, mit einer inneren Kantenlänge von ≤ 10 mm, vorteilhaft ≤ 5 mm und insbesondere vorteilhaft ≥ 0,5 oder ≥ 1 mm passieren. Bei diesen Korkpartikeln kann es sich erfindungsgemäß sowohl um Partikel aus unbehandeltem Rohkork, wie auch aus - beispielsweise durch Auslaugen mit kochendem Wasser - aufbereiteten Kork handeln. Selbstverständlich umfasst das erfindungsgemäße Verfahren auch die Verwendung von Korkpartikeln aus aufbereitetem recyceltem Kork.

Erfindungsgemäß können als Bindemittel ein Polyethylenimin und/oder ein Polyamidoamin sowie dessen entsprechende Ethyleniminderivate eingesetzt werden.

Unter Polyethyleniminen werden allgemein Polymere verstanden, in deren Hauptketten NH-Gruppen vorliegen, die jeweils durch zwei Methylengruppen getrennt sind. Man unterscheidet zwei Gruppen von Polyethyleniminen, nämlich unverzweigte und verzweigte Polyethylenimine, welche beide erfindungsgemäß umfasst sein sollen. Unverzweigtes Polyethylenimin wird beispielsweise durch eine Borkomplex-katalysierte isomerisierende Polymerisation von unsubstituierten 2-Oxazolin mit anschließender alkalischen Verseifung der erhaltenen Polymere erhalten. Großtechnisch von Interesse ist verzweigtes Polyethylenimin, welches beispielsweise durch kationische Polymerisation von Ethylenimin (Aziridin) mit Protonensäuren, Lewissäuren oder alkylierenden Reagenzien als Katalysatoren erhalten wird (siehe hierzu beispielsweise US-A 2,282,306 oder US-A 3,203,910). Im Gegensatz zum linearen Polyethylenimin, welches ausschließlich sekundäre NH-Aminofunktionen aufweist, weist verzweigtes Polyethyenimin, neben den vorgenannten sekundären Aminofunktionen, auch noch primäre und tertiäre Aminofunktionen auf. Inbesondere verzweigtes Polyethylenamin ist gut in Wasser löslich.

Erfindungsgemäß einsetzbares Polyethylenimin weist ein gewichtsmittleres Molekulargewicht ≥ 1000 und ≤ 2000000 g/mol, vorteilhaft ≥ 10000 und ≤ 1500000 g/mol und insbesondere vorteilhaft ≥ 500000 und ≤ 1000000 g/mol auf. Die Bestimmung des gewichtsmittleren Molekulargewichts ist dem Fachmann geläufig und erfolgt beispielsweise nach der Methode der Gelpermeationschromatographie.

Polyamidoamine sind dem Fachmann geläufig (siehe hierzu beispielsweise US-A 4,144,123). Sie werden durch Kondensation von 4 bis 10 Kohlenstoffatomen aufweisenden Dicarbonsäuren mit Polyalkylenpolyaminen, die vorzugsweise 3 bis 10 primäre oder sekundäre Aminofunktionen (Aminogruppen) im Molekül enthalten, hergestellt. Geeignete Dicarbonsäuren sind beispielsweise Maleinsäure, Bernsteinsäure, Glutarsäure, Adipinsäure, Korksäure, Sebacinsäure oder Terephthalsäure. Selbstverständlich kann man auch Mischungen von 4 bis 10 Kohlenstoffatomen aufweisenden Dicarbonsäuren, wie beispielsweise Mischungen aus Glutarsäure und Adipinsäure oder Maleinsäure und Adipinsäure einsetzen. Insbesondere bevorzugt wird jedoch zur Herstellung der Polyamidoamine Adipinsäure eingesetzt.

Geeignete Polyalkylenpolyamine, die mit den Dicarbonsäuren kondensiert werden, sind alle Aminoverbindungen, welche wenigstens zwei Alkylengruppen, wie Ethylen-, Propylen- oder Butylengruppen und wenigstens drei primäre bzw. sekundäre Aminogruppen aufweisen, wie beispielsweise Diethylentriamin, Triethylentetramin, Dipropylentriamin, Tripropylentetramin, Dihexamethylentriamin, N-3-Aminopropylethylendiamin und/oder Bis(N,N'-3-aminopropyl)ethylendiamin. Die Polyalkylenpolyamine können auch in Form von Mischungen bei der Herstellung der Polyamidoamine eingesetzt werden. Die Polyamidoamine werden vorzugsweise durch Kondensation von Dicarbonsäuren und Polyalkylenaminen in Substanz hergestellt. Die Kondensation kann jedoch gegebenenfalls auch in inerten organischen Lösemitteln vorgenommen werden. Die Kondensation der Dicarbonsäuren mit den Polyalkylenpolyaminen wird üblicherweise im Temperaturbereich von beispielsweise 120 bis 220 °C durchgeführt, wobei man das bei der Reaktion entstehende Wasser aus dem Reaktionsgemisch abdestilliert. Die Kondensationsreaktion kann gegebenenfalls auch in Gegenwart von Lactonen oder Lactamen von Carbonsäuren mit 4 bis 8 Kohlenstoffatomen vorgenommen werden, beispielsweise in Gegenwart von Caprolactam. Pro Mol einer Dicarbonsäure verwendet man 0,8 bis 1,4 Mol und vorteilhaft 0,9 bis 1,2 Mol eines Polyalkylenpolyamins. Die so erhaltenen Polyamidoamine können noch primäre und sekundäre Aminogruppen, gegebenenfalls auch tertiäre Stickstoffatome aufweisen und sind in Wasser löslich.

Erfindungsgemäß einsetzbare Polyamidoamine weisen in Form einer 33 gew.-%igen wässrigen Lösung bei 20 °C eine Viskosität ≥ 100 und ≤ 500 mPas, vorteilhaft und ≤ 300 mPas und insbesondere vorteilhaft und ≤ 200 mPas auf. Die Bestimmung Viskosität erfolgt nach DIN 53015 mittels eines Kugelfallviskosimeters.

Erfindungsgemäß einsetzbaren Bindemittel sind auch die Umsetzungsprodukte der vorgenannten Polyamidoamine mit Ethylenimin, welche beispielsweise durch Pfropfung der Polyamidoamine mit Ethylenimin erhalten werden, indem man beispielsweise Ethylenimin in Gegenwart von Säuren (beispielsweise Schwefelsäure oder Phosphorsäure) oder in Gegenwart von Lewis-Säuren (beispielsweise Bortrifluoridetheraten) auf die Polyamidoamine einwirken lässt. Pro primärer und/oder sekundärer Aminogruppe im Polyamidoamin werden 1 bis 50, vorzugsweise 1 bis 10 Mol Ethylenimin aufgepfropft.

Die erfindungsgemäß als Bindemittel eingesetzten Ethyleniminderivate des Polyamidoamins umfassen auch Umsetzungsprodukte des mit Ethylenimin gepfropften Polyamidoamins mit einer wenigstens bifunktionellen Vernetzungskomponente. Produkte dieser Art werden beispielsweise gemäß der Lehre der vorgenannten US-A 4,144,123 als Retentions-, Flockungs- und Entwässerungsmittel bei der Herstellung von Papier verwendet. Darüber hinaus sind solche wenigstens bifunktionellen Vernetzungskomponenten in der WO 97/40087, Seite 6, Zeile 4 bis Seite 14, Zeile 44, offenbart. Auf diese Offenbarung soll im Rahmen dieser Schrift ausdrücklich Bezug genommen werden.

Außer den in der US-A 4,144,123 beschriebenen Bischlorhydrinethern von Polyalkylenglykolen als mindestens zwei funktionelle Gruppen aufweisenden Vernetzern eignen sich α,ω-Dichlorpolyalkylenglykole, die beispielsweise als Vernetzer aus der EP-B 25 515 bekannt sind. Sie sind dadurch erhältlich, dass man zwei- bis vierwertige Alkohole, vorzugsweise alkoxylierte zwei- bis vierwertige Alkohole entweder
a) mit Thionylchlorid unter HCI-Abspaltung und nachfolgender katalytischer Zersetzung der chlorsulfonierten Verbindungen unter Schwefeldioxidabspaltung umsetzt oder
b) mit Phosgen unter HCl-Abspaltung in die entsprechenden Bischlorkohlensäureester überführt und daraus anschließend durch katalytische Zersetzung unter Kohlendioxidabspaltung α,ω-Dichlorether herstellt.

Als Alkoholkomponente werden vorzugsweise ethoxylierte und/oder propoxylierte Glykole eingesetzt, die mit 1 bis 100, insbesondere 4 bis 40 Mol Ethylenoxid pro Mol Glykol zur Reaktion gebracht werden.

Andere geeignete Vernetzer sind α,ω- oder vicinale Dichloralkane, beispielsweise 1,2-Dichlorethan, 1,2-Dichlorpropan, 1,3-Dichlorpropan, 1,4-Dichlorbutan und 1,6-Dichlorhexan. Beispiele für weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxylierte oder propoxylierte Glycerine, Polyglycerine mit 2 bis 15 Glycerin-Einheiten im Molekül sowie gegebenenfalls ethoxylierte und/oder propoxylierte Polyglycerine. Vernetzer dieser Art sind beispielsweise aus der DE-A 29 16 356 bekannt. Außerdem eignen sich Vernetzer, die blockierte Isocyanat-Gruppen enthalten, z. B. Trimethylhexamethylendiisocyanat blockiert mit 2,2,3,6-Tetramethylpiperidon-4. Solche Vernetzer sind bekannt, vgl. beispielsweise DE-A 40 28 285 sowie Aziridin-Einheiten enthaltende Vernetzer auf Basis von Polyethern oder substituierten Kohlenwasserstoffen, z. B. 1,6-Bis-N-aziridinohexan, vgl. US-A 3,977,923. Es ist selbstverständlich auch möglich, Mischungen aus zwei oder mehreren Vernetzern zur Molekulargewichtserhöhung zu verwenden.

Besonders bevorzugt werden halogenfreie Vernetzer verwendet. Sie sind mindestens bifunktionell und sind vorzugsweise ausgewählt aus der Gruppe bestehend aus:
(1) Ethylencarbonat, Propylencarbonat und/oder Harnstoff,
(2) monoethylenisch ungesättigten Carbonsäuren und deren Estern, Amiden und Anhydriden, mindestens zweibasischen gesättigten Carbonsäuren oder Polycarbonsäuren sowie den jeweils davon abgeleiteten Estern, Amiden und Anhydriden,
(3) Umsetzungsprodukten von Polyetherdiaminen, Alkylendiaminen, Polyalkylenpolyaminen, Alkylenglykolen, Polyalkylenglykolen oder deren Gemischen mit monoethylenisch ungesättigten Carbonsäuren, Estern, Amiden oder Anhydriden monoethylenisch ungesättigter Carbonsäuren, wobei die Umsetzungsprodukte mindestens zwei ethylenisch ungesättigte Doppelbindungen, Carbonsäureamid-, Carboxyl- oder Estergruppen als funktionelle Gruppen aufweisen,
(4) mindestens zwei Aziridinogruppen enthaltenden Umsetzungsprodukten von Dicarbonsäureestern mit Ethylenimin
sowie Mischungen der genannten Vernetzer.

Geeignete Vernetzer der Gruppe (1) sind Ethylencarbonat, Propylencarbonat und Harnstoff. Aus dieser Gruppe von Monomeren wird vorzugsweise Propylencarbonat verwendet. Die Vernetzer dieser Gruppe reagieren unter Kohlendioxidabspaltung mit Aminogruppen enthaltenden Verbindungen.

Geeignete halogenfreie Vernetzer der Gruppe (2) sind z. B. monoethylenisch ungesättigte Monocarbonsäuren wie Acrylsäure, Methacrylsäure und Crotonsäure sowie die davon abgeleiteten Amide, Ester und Anhydride. Die Ester können sich von Alkoholen mit 1 bis 22, vorzugsweise 1 bis 18 C-Atomen ableiten. Die Amide sind vorzugsweise unsubstituiert, können jedoch einen C1- bis C22-Alkylrest als Substituent tragen.

Weitere halogenfreie Vernetzer der Gruppe (2) sind mindestens zweibasische gesättigte Carbonsäuren wie Dicarbonsäuren sowie die davon abgeleiteten Salze, Diester und Diamide. Diese Verbindungen können beispielsweise mit Hilfe der Formel I charakterisiert werden. 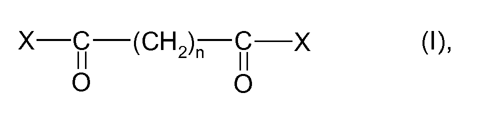 in der
X = OH, OR, N(R¹)₂
R = C₁- bis C₂₂-Alkyl
R¹ = H, C₁- bis C₂₂-Alkyl und
n = ganze Zahl von 0 bis 22
bedeuten.

Außer den Dicarbonsäuren der Formel I eignen sich beispielsweise monoethylenisch ungesättigte Dicarbonsäuren wie Maleinsäure oder Itaconsäure. Die Ester der in Betracht kommenden Dicarbonsäuren leiten sich vorzugsweise von Alkoholen mit 1 bis 4 Kohlenstoffatomen ab. Geeignete Dicarbonsäureester sind beispielsweise Oxalsäuredimethylester, Oxalsäurediethylester, Oxalsäurediisopropylester, Bernsteinsäuredimethylester, Bernsteinsäurediethylester, Bernsteinsäurediisopropylester, Bernsteinsäuredi-n-propylester, Bernsteinsäurediisobutylester, Adipinsäuredimethylester, Adipinsäurediethylester und Adipinsäurediisopropylester. Geeignete Ester von ethylenisch ungesättigten Dicarbonsäuren sind beispielsweise Maleinsäuredimethylester, Maleindiethylester, Maleinsäurediisopropylester, Itaconsäuredimethylester und Itaconsäurediisopropylester. Außerdem kommen substituierte Dicarbonsäuren und ihre Ester wie Weinsäure (D-, L-Form und als Racemat) sowie Weinsäureester, wie Weinsäuredimethylester und Weinsäurediethylester in Betracht.

Geeignete Dicarbonsäureanhydride sind beispielsweise Maleinsäureanhydrid, Itaconsäureanhydrid und Bernsteinsäureanhydrid. Die Vernetzung von mit Ethylenimin gepfropften Polyamidoaminen, mit den vorstehend genannten halogenfreien Vernetzern erfolgt unter Bildung von Amidgruppen bzw. bei Amiden, wie Adipinsäurediamid durch Umamidierung. Maleinsäureester, monoethylenisch ungesättigte Dicarbonsäuren sowie deren Anhydride können sowohl durch Bildung von Carbonsäureamidgruppen als auch durch Addition von NH-Gruppen der zu vernetzenden mit Ethylenimin gepfropften Polyamidoamine nach Art einer Michael-Addition eine Vernetzung bewirken.

Zu mindestens zweibasischen gesättigten Carbonsäuren gehören beispielsweise Tri-und Tetracarbonsäuren wie Citronensäure, Propantricarbonsäure, Ethylendiamintetraessigsäure und Butantetracarbonsäure. Als Vernetzer der Gruppe (2) kommen außerdem die von den vorstehend genannten Carbonsäuren abgeleiteten Salze, Ester, Amide und Anhydride in Betracht.

Geeignete Vernetzer der Gruppe (2) sind außerdem Polycarbonsäuren, die durch Polymerisieren von monoethylenisch ungesättigten Carbonsäuren oder Anhydriden erhältlich sind. Als monoethylenisch ungesättigte Carbonsäuren kommen z. B. Acrylsäure, Methacrylsäure, Crotonsäure, Maleinsäure und/oder Itaconsäure in Betracht. So eignen sich als Vernetzer insbesondere Polyacrylsäuren, Copolymerisate aus Acrylsäure und Methacrylsäure oder Copolymerisate aus Acrylsäure und Maleinsäure.

Weitere geeignete Vernetzer (2) werden z. B. durch Polymerisieren von Anhydriden wie Maleinsäureanhydrid in einem inerten Lösemittel wie Toluol, Xylol, Ethylbenzol, Isopropylbenzol oder Lösemittelgemischen in Gegenwart von Radikalen bildenden Initiatoren hergestellt. Als Initiatoren verwendet man vorzugsweise Peroxyester wie tert.-Butyl-per-2-ethylhexanoat. Außer den Homopolymerisaten kommen Copolymerisate von Maleinsäureanhydrid in Betracht, z. B. Copolymerisate aus Acrylsäure und Maleinsäureanhydrid oder Copolymerisaten aus Maleinsäureanhydrid und einem C2- bis C30-Olefin.

Bevorzugt sind beispielsweise Copolymerisate aus Maleinsäureanhydrid und Isobuten oder Copolymerisate aus Maleinsäureanhydrid und Diisobuten. Die Anhydridgruppen enthaltenden Copolymerisate können gegebenenfalls durch Umsetzung mit C1- bis C20-Alkoholen oder Ammoniak oder Aminen modifiziert sein und in dieser Form als Vernetzer eingesetzt werden.

Das gewichtsmittlere Molekulargewicht M_{w} der Homo- und Copolymeren beträgt in der Regel bis zu 10000 g/mol, vorzugsweise 500 bis 5000 g/mol. Polymerisate der oben genannten Art werden z. B. beschrieben in EP-A 276 464, US-A 3,810,834, GB-A 1 411 063 und US-A 4,818,795. Die mindestens zweibasischen gesättigten Carbonsäuren und die Polycarbonsäuren können auch in Form der Alkali- oder Ammoniumsalze als Vernetzer eingesetzt werden. Bevorzugt verwendet man dabei die Natriumsalze. Die Polycarbonsäuren können partiell, z. B. zu 10 bis 50 mol-% oder auch vollständig neutralisiert sein.

Bevorzugt eingesetzte Verbindungen der Gruppe (2) sind Weinsäuredimethylester, Weinsäurediethylester, Adipinsäuredimethylester, Adipinsäurediethylester, Maleinsäuredimethylester, Maleinsäurediethylester, Maleinsäureanhydrid, Maleinsäure, Acrylsäure, Acrylsäuremethylester, Acrylsäureethylester, Acrylamid und Methacrylamid.

Halogenfreie Vernetzer der Gruppe (3) sind beispielsweise Umsetzungsprodukte von Polyetherdiaminen, Alkylendiaminen, Polyalkylenpolyaminen, Alkylenglykolen, Polyalkylenglykolen oder deren Gemischen mit
- monoethylenisch ungesättigten Carbonsäuren,
- Estern monoethylenisch ungesättigter Carbonsäuren,
- Amiden monoethylenisch ungesättigter Carbonsäuren oder
- Anhydriden monoethylenisch ungesättigter Carbonsäuren.

Die Polyetherdiamine werden beispielsweise durch Umsetzung von Polyalkylenglykolen mit Ammoniak hergestellt. Die Polyalkylenglykole können 2 bis 50, vorzugsweise 2 bis 40 Alkylenoxideinheiten enthalten. Hierbei kann es sich beispielsweise um Polyethylenglykole, Polypropylenglykole, Polybutylenglykole oder auch um Blockcopolymerisate aus Ethylenglykol und Propylenglykol, Blockcopolymerisate aus Ethylenglykol und Butylenglykol oder um Blockcopolymerisate aus Ethylenglykol, Propylenglykol und Butylenglykol handeln. Außer den Blockcopolymerisaten eignen sich zur Herstellung der Polyetherdiamine statistisch aufgebaute Copolymerisate aus Ethylenoxid und Propylenoxid und gegebenenfalls Butylenoxid. Polyetherdiamine leiten sich außerdem von Polytetrahydrofuranen ab, die 2 bis 75 Tetrahydrofuraneinheiten aufweisen. Die Polytetrahydrofurane werden ebenfalls durch Umsetzung mit Ammoniak in die entsprechenden α,ω-Polyetherdiamine überführt. Vorzugsweise verwendet man zur Herstellung der Polyetherdiamine Polyethylenglykole oder Blockcopolymerisate aus Ethylenglykol und Propylenglykol.

Als Alkylendiamine kommen beispielsweise Ethylendiamin, Propylendiamin 1,4-Diaminobutan und 1,6-Diaminohexan in Betracht. Geeignete Polyalkylenpolyamine sind beispielsweise Diethylentriamin, Triethylentetramin, Dipropylentriamin, Tripropylentetramin, Dihexamethylentriamin, Aminopropylethylendiamin, Bis-Aminopropylethylendiamin und Polyethylenimine mit gewichtsmittleren Molekulargewichten bis zu 5000 g/mol. Die vorstehend beschriebenen Amine werden mit monoethylenisch ungesättigten Carbonsäuren, Estern, Amiden oder Anhydriden monoethylenisch ungesättigter Carbonsäuren so umgesetzt, dass die entstehenden Produkte mindestens 2 ethylenisch ungesättigte Doppelbindungen, Carbonsäureamid-, Carboxyl- oder Estergruppen als funktionelle Gruppen aufweisen. So erhält man beispielsweise bei der Umsetzung der in Betracht kommenden Amine oder Glykole mit Maleinsäureanhydrid Verbindungen, die beispielsweise mit Hilfe der Formel II charakterisiert werden können: 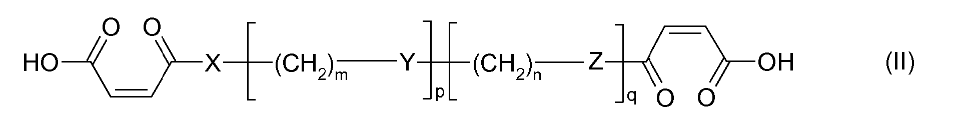
in der X, Y, Z = O, NH
   und Y zusätzlich noch CH₂
m, n = eine ganze Zahl von 0 bis 4
p, q = eine ganze Zahl von 0 bis 45000
bedeuten.

Die Verbindungen der allgemeinen Formel II sind beispielsweise dadurch erhältlich, daß man Alkylenglykole, Polyethylenglykole, Polyethylenimine, Polypropylenimine, Polytetrahydrofurane, α,ω-Diole oder α,ω-Diamine mit Maleinsäureanhydrid oder den oben angegebenen anderen monoethylenisch ungesättigten Carbonsäuren bzw. Carbonsäurederivaten umsetzt. Die für die Herstellung der Vernetzer II in Betracht kommenden Polyethylenglykole haben vorzugsweise Molekulargewichte von 62 bis 10000 g/mol, die Molekulargewichte der Polyethylenimine betragen vorzugsweise 129 bis 50000 g/mol und die der Polypropylenimine 171 bis 50000 g/mol. Als Alkylenglykole eignen sich beispielsweise Ethylenglykol, 1,2-Propylenglykol, 1,4-Butandiol und 1,6-Hexandiol.

Vorzugsweise eingesetzte α,ω-Diamine sind Ethylendiamin und von Polyethylenglykolen oder von Polytetrahydrofuranen mit gewichtsmittleren Molekulargewichten von jeweils ca. 400 bis 5000 abgeleitete α,ω-Diamine.

Besonders bevorzugt in Betracht kommende Vernetzer der Formel II sind Umsetzungsprodukte von Maleinsäureanhydrid mit α,ω-Polyetherdiaminen eines gewichtsmittleren Molekulargewichts von 400 bis 5000 g/mol, die Umsetzungsprodukte von Polyethyleniminen eines gewichtsmittleren Molekulargewichts von 129 bis 50000 g/mol mit Maleinsäureanhydrid sowie die Umsetzungsprodukte von Ethylendiamin oder Triethylentetramin mit Maleinsäureanhydrid im Molverhältnis von 1 : ≥ 2. Bei der Umsetzung von Polyalkylenglykolen bzw. Diolen mit monoethylenisch ungesättigten Carbonsäuren, ihren Estern, Amiden oder Anhydriden entstehen unter Erhalt der Doppelbindung der monoethylenisch ungesättigten Carbonsäuren bzw. ihrer Derivate, Vernetzer, bei denen die monoethylenisch ungesättigten Carbonsäuren bzw. ihre Derivate über eine Amidgruppe mit den Polyetherdiaminen, Alkylendiaminen, oder Polyalkylenpolyaminen und über eine Estergruppe mit den Alkylenglykolen bzw. Polyalkylenglykolen verknüpft sind. Diese Umsetzungsprodukte enthalten mindestens zwei ethylenisch ungesättigte Doppelbindungen. Dieser Vernetzertyp reagiert mit den Aminogruppen der zu vernetzenden Verbindungen nach Art einer Michael-Addition an die endständigen Doppelbindungen dieser Vernetzer und gegebenenfalls zusätzlich unter Bildung von Amidgruppen.

Polyetherdiamine, Alkylendiamine und Polyalkylenpolyamine können mit Maleinsäureanhydrid oder den ethylenisch ungesättigten Carbonsäuren bzw. deren Derivaten auch unter Anlagerung an die Doppelbindung nach Art einer Michael-Addition reagieren. Hierbei erhält man Vernetzer der Formel III 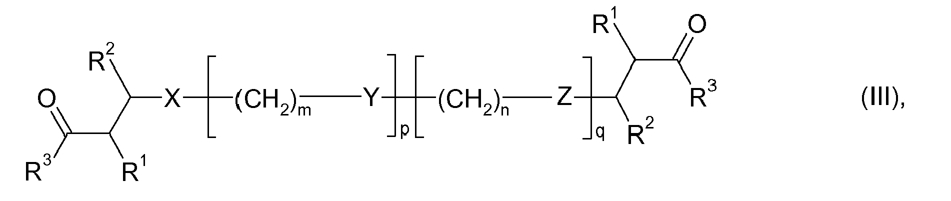
in der X, Y, Z = O, NH
und Y zusätzlich noch CH₂
R¹ = H, CH₃
R² = H, COOMe, COOR, CONH₂
R³ = OR, NH₂, OH, OMe
R = C₁- bis C₂₂-Alkyl
Me = H, Na, K, Mg, Ca

m, n = eine ganze Zahl von 0 bis 4
p, q = eine ganze Zahl Von 0 bis 45000
bedeuten.

Die Vernetzer der Formel III bewirken über ihre endständigen Carboxyl- oder Estergruppen unter Ausbildung einer Amidfunktion eine Vernetzung mit den Aminogruppen enthaltenden Verbindungen. Zu dieser Klasse von Vernetzersystemen gehören auch die Umsetzungsprodukte von monoethylenisch ungesättigten Carbonsäureestern mit Alkylendiaminen und Polyalkylenpolyaminen, z.B. eignen sich die Additionsprodukte von Ethylendiamin, Diethylentriamin, Triethylentetramin, Tetraethylenpentamin sowie von Polyethyleniminen mit gewichtsmittleren Molekulargewichten von beispielsweise 129 bis 50000 g/mol an Acrylsäure- oder Methacrylsäureester, wobei man auf 1 Mol der Aminkomponente mindestens 2 Mol der Acrylsäure- oder Methacrylsäureester einsetzt. Als Ester monoethylenisch ungesättigter Carbonsäuren setzt man bevorzugt die C1- bis C6-Alkylester der Acrylsäure oder Methacrylsäure ein. Besonders bevorzugt zur Herstellung der Vernetzer werden Acrylsäuremethylester und Acrylsäureethylester. Die Vernetzer, die durch Michael-Addition von Polyalkylenpolyaminen und ethylenisch ungesättigten Carbonsäuren, Estern, Amiden oder Anhydriden hergestellt werden, können mehr als zwei funktionelle Gruppen aufweisen. Die Anzahl dieser Gruppen hängt davon ab, in welchem Mol-Verhältnis die Reaktionsteilnehmer bei der Michael-Addition eingesetzt werden. So kann man z.B. an ein Mol eines 10 Stickstoffatome enthaltenden Polyalkylenpolyamins 2 bis 10, vorzugsweise 2 bis 8 Mol an ethylenisch ungesättigten Carbonsäuren bzw. ihren Derivaten nach Art einer Michael-Addition anlagern. An jeweils 1 Mol Polyalkylenpolyamine und Alkylendiamine können mindestens 2 bis höchstens 4 Mol der ethylenisch ungesättigten Carbonsäuren bzw. ihrer Derivate nach Art einer Michael-Addition angelagert werden.

Bei der Umsetzung von Diethylentriamin und einer Acrylsäureverbindung der Formel 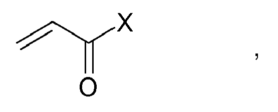 in der X für OH, NH₂ oder OR¹ und R¹ für C1- bis C22-Alkyl steht (z. B. Acrylsäure, Acrylamid oder Acrylester), entsteht nach Art einer Michael-Addition beispielsweise ein Vernetzer IV folgender Struktur 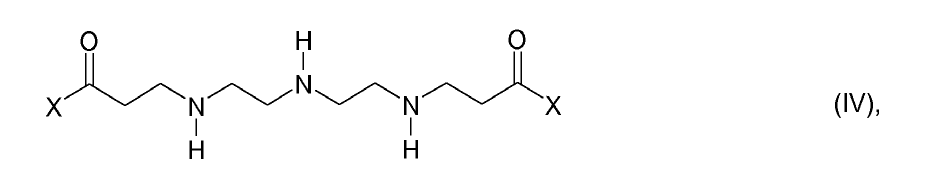 in der
X = NH₂, OH oder OR¹ und
R¹ für C₁- bis C₂₂-Alkyl
steht.

Die sekundären NH-Gruppen in den Verbindungen der Formel IV können gegebenenfalls mit Acrylsäure, Acrylamid oder Acrylestern nach Art einer Michael-Addition reagieren.

Als Vernetzer der Gruppe (3) verwendet man vorzugsweise die Verbindungen der Formel II, die mindestens 2 Carboxylgruppen enthalten und durch Umsetzung von Polyetherdiaminen, Ethylendiamin oder Polyalkylenpolyaminen mit Maleinsäureanhydrid erhältlich sind oder mindestens 2 Estergruppen enthaltende Michael-Additionsprodukte aus Polyetherdiaminen, Polyalkylenpolyaminen oder Ethylendiamin und Estern der Acrylsäure oder Methacrylsäure mit jeweils einwertigen 1 bis 4 C-Atome enthaltenden Alkoholen, beispielsweise Methanol, Ethanol, n-Propanol, iso-Propanol oder n-Butanol.

Als halogenfreie Vernetzer der Gruppe (4) kommen Reaktionsprodukte in Betracht, die durch Umsetzung von Dicarbonsäureestern, die mit einwertigen Alkoholen mit 1 bis 5 Kohlenstoffatomen vollständig verestert sind, mit Ethylenimin hergestellt werden. Geeignete Dicarbonsäureester sind beispielsweise Oxalsäuredimethylester, Oxalsäurediethylester, Bernsteinsäuredimethylester, Bernsteinsäurediethylester, Adipinsäuredimethylester, Adipinsäurediethylester und Glutarsäuredimethylester. So erhält man beispielsweise bei der Umsetzung von Diethyloxalat mit Ethylenimin Bis-[β-(1-Aziridino)ethyl]oxalsäureamid. Die Dicarbonsäureester werden mit Ethylenimin beispielsweise im Molverhältnis von 1 zu mindestens 4 umgesetzt. Reaktive Gruppen dieser Vernetzer sind die endständigen Aziridingruppen. Diese Vernetzer können beispielsweise mit Hilfe der Formel V charakterisiert werden: 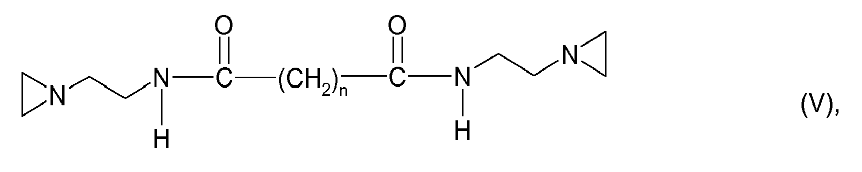 worin
n = eine ganze Zahl von 0 bis 22
bedeutet.

Zur Vernetzungsreaktion des mit Ethylenimin gepfropften Polyamidoamins mit einer wenigstens bifunktionellen Vernetzungskomponente werden die Art und Mengen der eingesetzten Edukte so gewählt und die Vernetzungsreaktion so geführt, dass die entstehenden Produkte wasserlöslich sind. Häufig beträgt die Menge an Vernetzungskomponente 0,1 bis 50 g und oft 10 bis 40 g, jeweils bezogen auf 100 g mit Ethylenimin gepfropftes Polyamidoamin. Die Vernetzungsreaktion erfolgt in bekannter Weise durch Erhitzen der Reaktionskomponenten bei Temperaturen von 50 bis 220 °C, vorzugsweise bei Temperaturen von 60 bis 100 °C. Sofern die Vernetzungsreaktion bei Temperaturen oberhalb von 100 °C in wässrigem Medium durchgeführt wird, benötigt man dafür druckdicht ausgelegte Apparaturen, z. B. einen mit einem Rührer ausgestatteten Autoklaven.

Die erfindungsgemäß als Bindemittel eingesetzten Polyethylenimine und/oder Polyamidoamine sowie deren entsprechende Ethyleniminderivate sind in der Regel wasserlöslich und weisen bei 20 °C und 1 atm (= 1,013 bar absolut) eine Löslichkeit ≥ 10 g, vorteilhaft ≥ 100 g und insbesondere vorteilhaft ≥ 500 g pro Liter entionisiertem Wasser auf.

Die zur Beschichtung der Korkpartikel erfindungsgemäß eingesetzte Bindemittelmenge beträgt 0,1 bis 20 Gew.-%, vorteilhaft 1 bis 15 Gew.-% und insbesondere vorteilhaft 2 bis 12 Gew.-%, jeweils bezogen auf die Gesamtmenge der Korkpartikel. Dabei kann das Bindemittel in Substanz, gelöst in einem niedrigsiedenden organischen Lösemittel, wie beispielsweise Methanol, Ethanol, Isopropanol, aber auch Aceton, Methylethylketon oder Ethylacetat etc., oder gelöst in Wasser zur Beschichtung eingesetzt werden. Insbesondere vorteilhaft wird das Bindemittel in Form einer wässrigen Lösung auf die Korkpartikel aufgebracht. Die Beschichtung der Korkpartikel mit dem erfindungsgemäßen Bindemittel an sich ist unkritisch und erfolgt beispielsweise durch Besprühen, Tränken oder Mischen. Insbesondere vorteilhaft werden die Oberflächen der Korkpartikel gleichmäßig mit dem Bindemittel beschichtet.

Wird das Bindemittel in Form einer Lösung auf die Korkpartikel aufgebracht, so kann es vorteilhaft sein, die beschichteten Korkpartikel einem Trocknungsschritt, beispielsweise bei einer Temperatur ≥ 50 und ≤ 100 °C zu unterziehen. Wird das Bindemittel in Form einer wässrigen Lösung auf die Korkpartikel aufgebracht, so kann häufig auf einen Trocknungsschritt verzichtet werden.

Nach dem Beschichten werden die beschichteten Korkpartikel zu einem Formkörper geformt und daran anschließend, der so erhaltene Formkörper einem thermischen Behandlungsschritt unterzogen.

Zur Herstellung des Formkörpers werden die beschichteten Korkpartikel geformt. Dies erfolgt beispielsweise dergestalt, dass die beschichteten Korkpartikel, gegebenenfalls unter Druckanwendung (Vorpressung) bei einer Temperatur von häufig ≤ 50 °C oder ≤ 40 °C in eine dem Formkörper entsprechende Negativhohlform gefüllt und daran anschließend der in dieser Hohlform befindliche Formkörper einem thermischen Behandlungsschritt bei einer Temperatur ≥ 80 und ≤ 250 °C, vorteilhaft ≥ 110 und ≤ 200 °C und insbesondere vorteilhaft ≥ 120 und ≤ 170 °C unterzogen. Insbesondere vorteilhaft wird die Vorpressung und/oder der thermische Behandlungsschritt bei einem Druck ≥ 0,1 und ≤ 200 bar und bevorzugt ≥ 1 und ≤ 100 bar (jeweils Überdruck) durchgeführt. Dabei wird in der Regel der thermische Behandlungschritt derart durchgeführt, dass durch das Pressen unter dem angewandten Druck das (Schütt)Volumen der beschichteten Korkpartikel in der Negativhohlform um wenigstens 50 Vol-%, vorteilhaft um wenigstens 66 Vol-% und insbesondere vorteilhaft um wenigstens 75 Vol.-% reduziert wird.

Damit beim thermischen Behandlungsschritt ggf. wässriges Lösungsmittel bzw. frei werdendes Reaktionswasser aus der Hohlform entweichen kann, weist diese vorteilhaft entsprechende Öffnungen auf.

Die für den thermischen Behandlungsschritt erforderliche Zeitdauer ist unkritisch und im wesentlichen abhängig von der Art und der Menge des verwendeten Bindemittels, der Größe der verwendeten Korkpartikel sowie der Dichte des herzustellenden Formkörpers. Sie kann von einem Fachmann in wenigen routinemäßigen Vorversuchen ermittelt werden. Generell lässt sich sagen, dass die zur Herstellung der Formkörper erforderliche Zeitdauer umso höher ist, je größer die Dichte des Formkörpers, je höher die Bindemittelmenge und je niedriger die Temperatur ist. In der Regel beträgt die Zeitdauer des thermischen Behandlungsschrittes ≥ 1 und ≤ 60 Minuten, oft ≥ 5 und ≤ 45 Minuten und häufig ≥ 10 und ≤ 35 Minuten. Nach dem thermischen Behandlungsschritt lässt man den Formkörper häufig noch in der Hohlform auf eine Temperatur ≤ 50 °C und insbesondere ≤ 30 °C abkühlen. Wesentlich ist, dass die Herstellung des erfindungsgemäßen Formkörpers sowohl diskontinuierlich wie auch kontinuierlich erfolgen kann.

Erfindungsgemäß sind als Formkörper insbesondere Flaschenkorken, Bodenplatten, Wärmeisolierplatten oder Schallschutzplatten zugänglich.

Abhängig vom Verwendungszweck der erfindungsgemäß zugänglichen Formkörper, weisen diese eine vorteilhafte Dichte auf. Diese liegt beispielsweise bei ca. 0,2 bis 0,5 g/cm³ bei Flaschenkorken.

Durch das vorliegende Verfahren wird ein alternatives Verfahren zur Herstellung von Korkformkörpern, insbesondere Flaschenkorken, zugänglich, welches mit bewährten Verbindungen, die bereits bei der Papierherstellung als Retentions-, Flockungs- und Entwässerungsmittel eingesetzt werden, neue kostengünstige Bindemittel für Korkpartikel zur Verfügung stellt.

Die Erfindung soll anhand nachfolgender, nicht einschränkender Beispiele erläutert werden.

### Beispiele

Für die Beispiele wurde getrocknetem Korkgranulat (gereinigter und gemahlener Kork, Schüttdichte 75 g/l, Partikelgröße: Siebfraktion > 1 und ≤ 5 mm, Restfeuchtigkeit: 4,6 Gew.-% [entsprechend dem Gewichtsverlust durch Trocknung bei 140 °C/30 Minuten] die jeweiligen Bindemittel in Form wässriger Bindemittellösungen zugegeben und diese Mischungen in einem Kenwood-Labormischer für 5 Minuten homogen gemischt. Die Bindemittelmengen, bezogen auf die Menge an Korkgranulat (fest/fest), sind in Tabelle 1 angegeben. Von diesen mit den wässrigen Bindemittellösungen beschichteten Korkgranulaten wurden jeweils die ebenfalls in Tabelle 1 angegebenen Mengen ohne weitere Trocknung in eine beheizbare zylindrische Aluminiumhohlform mit einem Innendurchmesser von 2,3 cm und einer Höhe von 12,1 cm gegeben, deren eine Seite (Boden) geschlossen war und in deren offenes Ende ein zylindrischer Aluminiumstempel mit einem Außendurchmesser von 2,2 cm eingeführt und damit das Korkgranulat auf eine Höhe von 4,5 cm zusammengepresst wurde. Die Aluminiumform wurde nun auf 160 °C aufgeheizt und für 30 Minuten bei dieser Temperatur belassen. Daran anschließend wurde die Aluminiumform unter Beibehaltung des Druckes auf den Edelstahlstempel innerhalb von 15 Minuten auf 30 °C abgekühlt und der gebildete Korkzylinder nach dem Entfernen des Zylinderbodens mittels des Aluminiumstempels aus dem Aluminiumzylinder gedrückt.

Die erhaltenen Korkzylinder wurden in Anlehnung an ISO 7322, Kapitel 6.5, einem Kochtest unterzogen, indem die erhaltenen Korkzylinder für 3 Stunden bei Atmosphärendruck (1 atm) in entionisiertem Wasser gekocht und daran anschließend visuell bewertet wurden. Wiesen die Korkzylinder keinerlei sichtbaren Beschädigungen auf, war der Test bestanden. Die erhaltenen Ergebnisse sind ebenfalls in Tabelle 1 angegeben.

Es wurden folgende Bindemittel eingesetzt:
B1: Polyethylenimin; gewichtsmittleres Molekulargewicht: 2000 g/mol; in Form einer 50 gew.-%igen wässrigen Lösung
B2: Polyethylenimin; gewichtsmittleres Molekulargewicht: 25000 g/mol; in Form einer 50 gew.-%igen wässrigen Lösung
B3: Polyethylenimin; gewichtsmittleres Molekulargewicht: 750000 g/mol; in Form einer 33 gew.-%igen wässrigen Lösung
B4: Polyamidoamin auf Basis von Adipinsäure und Triethylentetramin, gepfropft mit Ethylenimin und vernetzt mit einem epoxidgruppenhaltigen Vernetzer auf Basis von Polyethylenglykol; in Form einer 24 gew.-%igen wässrigen Lösung (Lupasol^{®} SK der Fa. BASF AG)

**Tabelle 1: Ergebnisse des Kochtests**

| Bindemittel | Bindemittelmenge bezogen auf Korkmenge (f/f) in Gew.-% | Einwaage beschichtetes Korkgranulat in g | Kochtest |
|---|---|---|---|
| B1 | 10 | 8,0 | bestanden |
| B2 | 10 | 8,0 | bestanden |
| B3 | 10 | 8,6 | bestanden |
| B4 | 10 | 9,4 | bestanden |
| B4 | 5 | 8,0 | bestanden |
| B4 | 2,5 | 7,4 | bestanden |
| - | 0 | 6,7 | nicht bestanden^{#)} |

| | | | |
|---|---|---|---|
| #) Kork ohne Bindemittel verpresst; zerfällt im Kochtest | | | |

## Patentansprüche

1. Verfahren zur Herstellung eines Formkörpers aus Korkpartikeln und einem Bindemittel, wobei die Korkpartikel mit dem Bindemittel beschichtet werden, daran anschließend die beschichteten Korkpartikel zu einem Formkörper geformt werden und daran anschließend der so erhaltene Formkörper einem thermischen Behandlungsschritt unterzogen wird, **dadurch gekennzeichnet, dass** als Bindemittel ein Polyethylenimin und/oder ein Kondensationsprodukt einer C₄-C₁₀-Dicarbonsäure und einem Polyalkylenpolyamin (Polyamidoamin) sowie dessen entsprechende Ethyleniminderivate eingesetzt werden und die Bindemittelmenge 0,1 bis 20 Gew.-%, bezogen auf die Gesamtmenge der Korkpartikel, beträgt.

2. Verfahren nach Anspruch 1, **dadurch gekennzeichnet, dass** das Bindemittel in Form einer wässrigen Lösung aufgebracht wird.

3. Verfahren nach einem der Ansprüche 1 oder 2, **dadurch gekennzeichnet, dass** das Polyethylenimin ein gewichtsmittleres Molekulargewicht ≥ 1000 g/mol und ≤ 2000000 g/mol aufweist.

4. Verfahren nach einem der Ansprüche 1 bis 3, **dadurch gekennzeichnet, dass** das Polyamidoamin in Form einer 33 gew.-%igen wässrigen Lösung bei 20 °C eine Viskosität ≥ 100 und ≤ 500 mPas aufweist.

5. Verfahren nach einem der Ansprüche 1 bis 4, **dadurch gekennzeichnet, dass** das Polyamidoamin als Säurekomponente Bernsteinsäure, Maleinsäure, Adipinsäure, Glutarsäure, Korksäure, Sebacinsäure und/oder Terephthalsäure in kondensierter Form enthält.

6. Verfahren nach einem der Ansprüche 1 bis 5, **dadurch gekennzeichnet, dass** das Polyamidoamin als Polyalkylenpolyamin Diethylentriamin, Triethylentetramin, Dipropylentriamin, Tripropylentetramin, Dihexamethylentriamin, N-3-Aminopropylethylendiamin und/oder Bis(N,N'-3-aminopropyl)ethylendiamin in kondensierter Form enthält.

7. Verfahren nach einem der Ansprüche 1 bis 6, **dadurch gekennzeichnet, dass** das Polyamidoamin mit 1 bis 10 Molekülen Ethylenimin pro primärer und/oder sekundärer Aminogruppe gepfropft ist.

8. Verfahren nach einem der Ansprüche 1 bis 7, **dadurch gekennzeichnet, dass** die Ethyleniminderivate des Polyamidoamins Umsetzungsprodukte des mit Ethylenimin gepfropften Polyamidoamins mit einer wenigstens bifunktionellen Vernetzungskomponente sind.

9. Verfahren nach einem der Ansprüche 1 bis 8, **dadurch gekennzeichnet, dass** der thermische Behandlungsschritt bei einer Temperatur ≥ 80 und ≤ 250 °C durchgeführt wird.

10. Verfahren nach einem der Ansprüche 1 bis 9, **dadurch gekennzeichnet, dass** der thermische Behandlungsschritt bei einem Druck ≥ 0,1 und ≤ 200 bar (Überdruck) erfolgt.

11. Formkörper erhältlich nach einem Verfahren gemäß einem der Ansprüche 1 bis 10.

12. Verwendung von Polyethyleniminen und/oder Polyamidoaminen sowie deren entsprechenden Ethyleniminderivate als Bindemittel für Korkpartikel.
